# FASCICULE DE BREVET EUROPEEN

(11) **EP 4 235 253 B1**
(45) Date de publication et mention de la délivrance du brevet: **10.07.2024**
(21) Numéro de dépôt: 23153392.8
(22) Date de dépôt: 26.01.2023
(51) Int. Cl.: G02B 17/06, G02B 23/06, B64G 1/10

(54) **TÉLÉSCOPE À CINQ MIROIRS**
FÜNFSPIEGELTELESKOP
FIVE MIRROR TELESCOPE

(30) Priorité: 25.02.2022 FR 2201694
(43) Date de publication de la demande: 30.08.2023
(73) Titulaire: Airbus Defence and Space SAS, 31402 Toulouse Cedex 4 (FR)
(72) Inventeur: PASTERNAK, Frédéric, 31402 Toulouse Cedex 4 (FR)
(74) Mandataire: Plasseraud IP

(56) Documents cités:
- JP-A- 2004 126 510
- US-A- 4 226 501
- US-A1- 2012 218 630
- US-B1- 6 556 648
- PAOLO CILIEGI ET AL: "MAORY: A Multi-conjugate Adaptive Optics RelaY for ELT", ARXIV.ORG, CORNELL UNIVERSITY LIBRARY, 201 OLIN LIBRARY CORNELL UNIVERSITY ITHACA, NY 14853, 20 March 2021 (2021-03-20), XP081913983, DOI: 10.18727/0722-6691/5216
- LANDINI FEDERICO ET AL: "Stray light evaluation for the astrometric gravitation probe mission", PROCEEDINGS OF SPIE; [PROCEEDINGS OF SPIE ISSN 0277-786X VOLUME 10524], SPIE, US, vol. 9907, 4 August 2016 (2016-08-04), pages 990741 - 990741, XP060077191, ISBN: 978-1-5106-1533-5, DOI: 10.1117/12.2232568

## Description

### Domaine technique

La présente description concerne un télescope à cinq miroirs, en particulier un tel télescope qui est destiné à être embarqué à bord d'un satellite.

### Technique antérieure

La saisie d'images de la surface de la Terre à partir d'un satellite qui est en orbite nécessite d'utiliser un télescope pour former les images. Pour une telle application, le télescope doit satisfaire un compromis entre la qualité des images qui sont saisies et le volume du télescope. Un télescope qui est plus grand est pénalisant à cause de son encombrement à bord du satellite et de la charge pondérale qu'il impose lors du lancement du satellite. Mais de façon générale, la qualité d'imagerie est d'autant meilleure que le télescope est de grande taille.

Des télescopes qui sont couramment utilisés pour les applications d'imagerie terrestre à partir de satellites sont du type anastigmatique à trois miroirs, ou TMA pour «three-mirror anastigmat» en anglais. Mais ces télescopes ont des volumes qui peuvent atteindre plusieurs m³ (mètre-cube) environ pour fournir des images de qualité suffisante, notamment lorsqu'ils sont utilisés à une altitude orbitale qui est comprise entre 600 km (kilomètre) environ et 850 km environ, avec une largeur de fauchée qui est comprise entre 300 km environ et 410 km environ.

En outre, pour ces applications spatiales d'imagerie, les télescopes sont associés à un système de calibration à bord de chaque satellite. Un tel système de calibration utilise un diffuseur dont les dimensions doivent être accordées à chaque télescope. Par exemple, pour un télescope de type TMA qui est utilisé dans les conditions indiquées ci-dessus, le diffuseur doit avoir une longueur d'environ 1,8 m (mètre). Or de telles dimensions pour le diffuseur de calibration causent un encombrement et une charge pondérale supplémentaires, qui s'ajoutent à ceux du télescope.

Les documents US 2012/218630, US 4 226 501, US 6 556 648 et JP 2004 126510 divulguent des télescopes conventionnels.

### Problème technique

A partir de cette situation, un but de la présente invention est de fournir de nouveaux télescopes qui réalisent des compromis améliorés entre leurs tailles et la qualité des images qu'ils forment.

Un autre but de l'invention est de fournir un télescope qui soit compatible avec un diffuseur de calibration dont la taille est restreinte.

### Résumé de l'invention

Pour atteindre l'un au moins de ces buts ou un autre, un premier aspect de l'invention propose un télescope à cinq miroirs tel que défini dans la revendication 1, pour former une image d'une scène dans un plan focal avec des rayons lumineux qui sont issus de la scène et se réfléchissent successivement et dans l'ordre sur un miroir primaire, un miroir secondaire, un miroir tertiaire, un quatrième miroir puis un cinquième miroir du télescope. Le télescope possède un plan de symétrie, et chacun des cinq miroirs possède une surface réfléchissante respective dont une portion au moins s'étend de chaque côté du plan de symétrie en ayant une forme courbe qui est symétrique par rapport au plan de symétrie.

Le télescope est conçu pour qu'un rayon lumineux axial qui y rentre en étant superposé à un axe optique du télescope, se propage dans le télescope jusqu'au plan focal en étant constitué successivement par, selon le sens de propagation du rayon axial, un segment initial en amont du miroir primaire, un premier segment intermédiaire entre le miroir primaire et le miroir secondaire, un deuxième segment intermédiaire entre le miroir secondaire et le miroir tertiaire, un troisième segment intermédiaire entre le miroir tertiaire et le quatrième miroir, un quatrième segment intermédiaire entre le quatrième miroir et le cinquième miroir, et un segment terminal entre le cinquième miroir et le plan focal.

Selon une première caractéristique de l'invention, les miroirs sont disposés de sorte que, à l'intérieur du plan de symétrie, le miroir secondaire et le quatrième miroir aient des sections respectives dans le plan de symétrie qui sont situées sur un même premier côté du segment initial du rayon axial, et le miroir tertiaire ainsi que le cinquième miroir aient d'autres sections respectives aussi dans le plan de symétrie qui sont situées sur un même second côté du segment initial du rayon axial, opposé au premier côté à l'intérieur du plan de symétrie.

Selon une deuxième caractéristique de l'invention, les miroirs sont disposés en outre de sorte que, aussi à l'intérieur du plan de symétrie, la section du miroir secondaire soit située en amont de la section du quatrième miroir, selon une projection perpendiculaire des sections des miroirs sur le segment initial du rayon axial, et la section du miroir tertiaire soit située en amont de la section du cinquième miroir, encore selon la projection perpendiculaire des sections des miroirs sur le segment initial du rayon axial.

Enfin, selon des caractéristiques supplémentaires de l'invention, les miroirs primaire, secondaire, tertiaire et le quatrième miroir sont orientés de sorte qu'à l'intérieur du plan de symétrie :
- le deuxième segment intermédiaire du rayon axial coupe le segment initial du rayon axial ;
- le troisième segment intermédiaire du rayon axial coupe le premier segment intermédiaire du rayon axial ; et
- le quatrième segment intermédiaire du rayon axial est situé d'un côté du troisième segment intermédiaire du rayon axial qui est opposé au deuxième segment intermédiaire du rayon axial.

Grâce à une telle série des orientations des réflexions successives qui sont produites par les miroirs, le télescope de l'invention peut être particulièrement compact, réduisant ainsi son encombrement et la charge pondérale pour une structure porteuse dans laquelle il peut être intégré, notamment lorsqu'il est destiné à être intégré à un satellite. Cette réduction d'encombrement et de poids permet d'obtenir un compromis amélioré avec la qualité des images qui sont formées par le télescope.

En outre, un tel télescope peut posséder une pupille d'entrée qui est décalée en amont du miroir primaire le long du segment initial du rayon axial. Cette pupille d'entrée peut avoir des dimensions réduites, si bien qu'un diffuseur de calibration qui est associé au télescope au niveau de son entrée optique peut aussi avoir des dimensions réduites.

De plus, grâce à cette possibilité d'une pupille d'entrée dont la taille est réduite, une quantité de lumière parasite qui pénètre dans le télescope par son entrée optique peut être diminuée, notamment en utilisant un diaphragme ou un écran latéral («baffle» en anglais) qui coïncide avec la pupille d'entrée.

Enfin, la structure de télescope proposée par l'invention est compatible avec un large intervalle de valeurs pour la longueur focale du télescope.

Dans des premiers modes de réalisation de l'invention, le cinquième miroir peut être orienté de sorte que le segment terminal du rayon axial soit situé d'un côté du quatrième segment intermédiaire du rayon axial qui est opposé à son troisième segment intermédiaire. Dans ce cas, le cinquième miroir peut être orienté en outre de sorte que le segment terminal du rayon axial passe entre le miroir primaire et le quatrième miroir, ou bien passe sur un côté du miroir primaire qui est opposé au quatrième miroir.

Dans des seconds modes de réalisation de l'invention, le cinquième miroir peut être orienté de sorte que le segment terminal du rayon axial coupe son troisième segment intermédiaire, et passe sur un côté du miroir secondaire qui est opposé au quatrième miroir.

L'un de ces premiers ou seconds modes de réalisation peut être sélectionné avantageusement en fonction du dégagement qu'il présente au niveau du plan focal du télescope. En effet, en fonction du type de capteur(s) d'images qui est (sont) disposé(s) dans ce plan focal, ce(s) capteur(s) d'images peut (peuvent) nécessiter plus ou moins d'espace disponible, par exemple pour y contenir une électronique de proximité et/ou une enceinte cryogénique.

De façon générale pour l'invention, la surface réfléchissante de chacun des miroirs primaire, secondaire, tertiaire, quatrième miroir et cinquième miroir peut être dépourvue de symétrie de révolution. Autrement dit, ces surfaces de miroirs peuvent être freeform^{®}, en étant produites par un procédé approprié, aussi désigné couramment par freeform^{®}.

Avantageusement, les miroirs primaire et secondaire peuvent être adaptés pour former une image intermédiaire de la scène qui est située entre le miroir secondaire et le miroir tertiaire. Il est ainsi possible de disposer divers composants optiques sur le second segment intermédiaire du rayon axial, avec des dimensions réduites pour ces composants sans restreindre le champ de vue du télescope. Il est aussi possible d'y disposer un diaphragme de champ, en fonction des applications du télescope.

Un télescope qui est conforme à l'invention peut comprendre en outre :
- un séparateur dichroïque qui est situé sur le segment terminal du rayon axial, de façon à produire une image du plan focal du télescope ;
- au moins un premier capteur d'images, qui est superposé au plan focal du télescope ; et
- au moins un second capteur d'images, qui est superposé à l'image du plan focal du télescope produite par le séparateur dichroïque.
Le séparateur dichroïque peut notamment être adapté pour séparer des rayons lumineux qui sont associés à des valeurs de longueur d'onde comprises entre 400 nm (nanomètre) et 1400 nm, par rapport à d'autres rayons lumineux qui sont associés à des valeurs de longueur d'onde comprises entre 1400 nm et 2500 nm. L'un de ces deux domaines spectraux peut être attribué au(x) capteur(s) d'images du plan focal ou à celui (ceux) de l'image du plan focal qui est produite par le séparateur dichroïque, en fonction des dégagements qui sont disponibles au niveau du plan focal et de son image. La position précise et l'orientation du séparateur dichroïque peuvent aussi être sélectionnées à partir des mêmes considérations.

Un deuxième aspect de l'invention propose un satellite tel que défini dans la revendication 9, qui comprend un télescope conforme au premier aspect d'invention, ce télescope étant embarqué à bord du satellite.

Enfin, un troisième aspect de l'invention propose un procédé de saisie d'images de la surface de la Terre, tel que défini dans la revendication 10, à partir d'un satellite qui est en orbite autour de la Terre, le satellite étant conforme au second aspect d'invention et les images étant formées par le télescope. Alors, chaque image est saisie pendant que le satellite et le télescope sont orientés de sorte qu'une intersection du plan de symétrie du télescope avec son plan focal soit parallèle à une direction de déplacement apparent de la surface de la Terre dans le plan focal.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1a] illustre une configuration possible pour un système à deux miroirs successifs ;
[Fig. 1b] correspond à [Fig. 1a] pour une configuration alternative ;
[Fig. 2] illustre une première configuration possible pour un télescope qui est conforme à la présente invention ;
[Fig. 3] correspond à [Fig. 2] pour une deuxième configuration possible d'un télescope qui est conforme à l'invention ;
[Fig. 4] correspond aussi à [Fig. 2] mais pour une troisième configuration possible d'un télescope qui est conforme à l'invention ;
[Fig. 5] est un schéma d'agencement possible de plan focal pour un télescope conforme à l'invention ; et
[Fig. 6] illustre une application de l'invention.

### Description détaillée de l'invention

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement, et des références identiques qui sont indiquées dans des figures différentes désignent des éléments identiques ou qui ont des fonctions identiques.

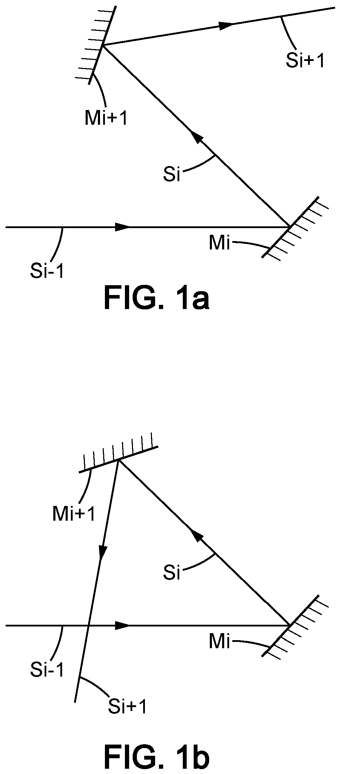

[Fig. 1a] et [Fig. 1b] montrent deux configurations qui sont possibles alternativement pour une succession de deux miroirs disposés sur le trajet d'un rayon lumineux. Les deux miroirs sont désignés par Mi et Mi+1, le rayon lumineux étant réfléchi d'abord par le miroir Mi puis par le miroir Mi+1. On suppose que ces réflexions sont coplanaires. Le rayon lumineux est alors constitué d'un segment Si-1 en amont du miroir Mi, d'un segment intermédiaire Si entre les miroirs Mi et Mi+1, et d'un segment Si+1 en aval du miroir Mi+1, les termes d'amont et d'aval étant utilisés par rapport au sens de propagation du rayon lumineux. Dans la configuration de [Fig. 1a], le miroir Mi+1 est orienté de sorte que le segment Si+1 soit situé d'un côté du segment intermédiaire Si qui est opposé au segment Si-1. Ainsi, le segment Si+1 ne coupe pas le segment Si-1. Cette configuration de [Fig. 1a] est appelée configuration z. A l'inverse, dans la configuration de [Fig. 1b], le miroir Mi+1 est orienté de sorte que le segment Si+1 coupe le segment Si-1. La configuration de [Fig. 1b] est alors appelée configuration α, par opposition à la configuration z et par analogie avec les formes de ces lettres α et z.

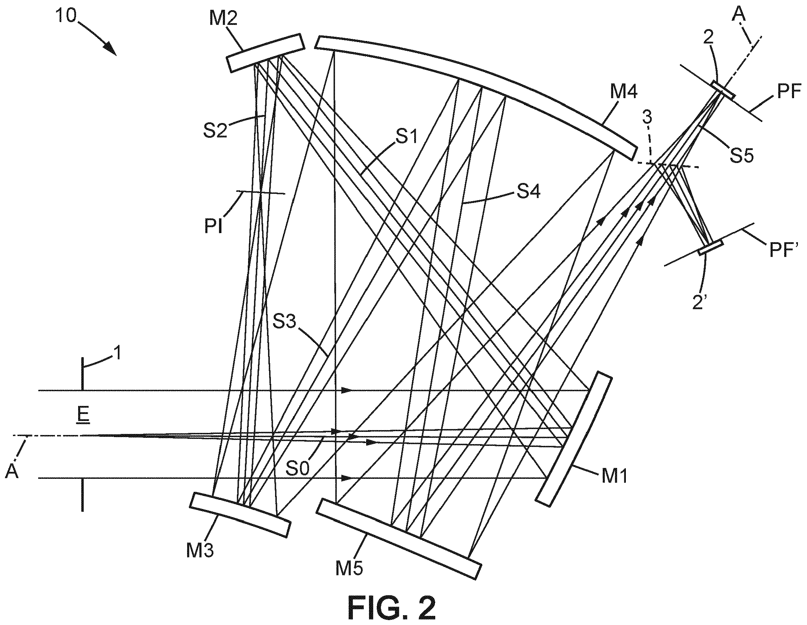

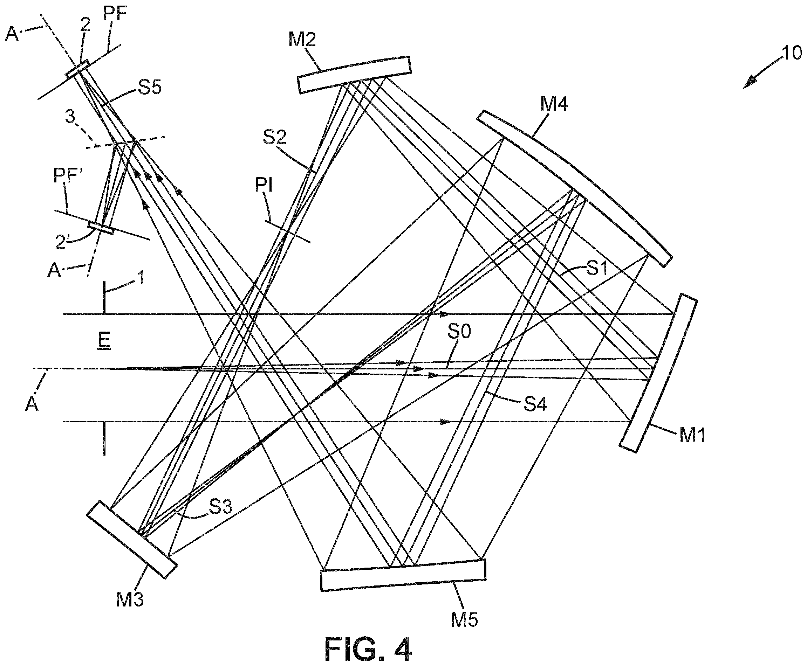

[Fig. 2]-[Fig. 4] sont des sections de trois télescopes conformes à l'invention, chacune dans le plan de symétrie du télescope. Ces télescopes, qui sont désignés globalement par la référence 10, comprennent chacun un miroir primaire M1, un miroir secondaire M2, un miroir tertiaire M3, un quatrième miroir M4 et un cinquième miroir M5. A-A désigne l'axe optique de chaque télescope 10. Alors un rayon lumineux qui entre dans le télescope en étant superposé à cet axe optique A-A, appelé rayon axial, est réfléchi successivement par le miroir M1, puis le miroir M2, puis le miroir M3, puis le miroir M4 et enfin par le miroir M5, puis parvient au plan focal PF du télescope. L'entrée du télescope 10 est désignée par la lettre E dans les figures, correspondant à la pupille d'entrée. Cette pupille d'entrée est située en amont du miroir M1 par rapport au sens de propagation de la lumière. Elle peut être déterminée par un diaphragme d'ouverture, qui est désigné par la référence 1 et peut avoir une forme circulaire. Le plan focal PF est le lieu de formation d'image pour chaque télescope 10, dans lequel est placé au moins un capteur d'images, désigné par la référence 2. Bien que ce capteur d'images 2 soit représenté comme un composant unique dans [Fig. 2]-[Fig. 4], il peut être remplacé par une multiplicité de capteurs d'images comme décrit plus loin. L'axe optique A-A peut passer par un point central de la surface photosensible du capteur d'images 2. Les surfaces réfléchissantes des miroirs M1-M5 n'ayant pas de lignes de singularité dans le plan de symétrie, toutes les réflexions du rayon axial sont contenues dans ce plan de symétrie. Le rayon axial est alors constitué des segments suivants, qui sont connectés entre eux par les réflexions successives sur les miroirs M1-M5 :
un segment initial, noté S0, en amont du miroir M1,
un premier segment intermédiaire, noté S1, entre les miroirs M1 et M2,
un deuxième segment intermédiaire, noté S2, entre les miroirs M2 et M3,
un troisième segment intermédiaire, noté S3, entre les miroirs M3 et M4,
un quatrième segment intermédiaire, noté S4, entre les miroirs M4 et M5, et
un cinquième segment intermédiaire, noté S5, entre le miroir M5 et le plan focal PF.

Pour chacun des télescopes 10 qui sont conformes à l'invention, les miroirs M2 et M4 sont disposés pour intersecter le plan de symétrie d'un même côté du segment initial S0, qui est opposé au côté des intersections des miroirs M3 et M5 avec le plan de symétrie. En outre, les cinq miroirs sont supportés fixement par une monture (non représentée) du télescope de sorte que la projection du miroir M2 sur le segment initial S0 soit décalée vers l'entrée E du télescope 10 par rapport à la projection du miroir M4, aussi sur le segment initial S0. De même, la projection du miroir M3 sur le segment initial S0 est décalée vers l'entrée E du télescope 10 par rapport à la projection du miroir M5 sur le segment initial S0.

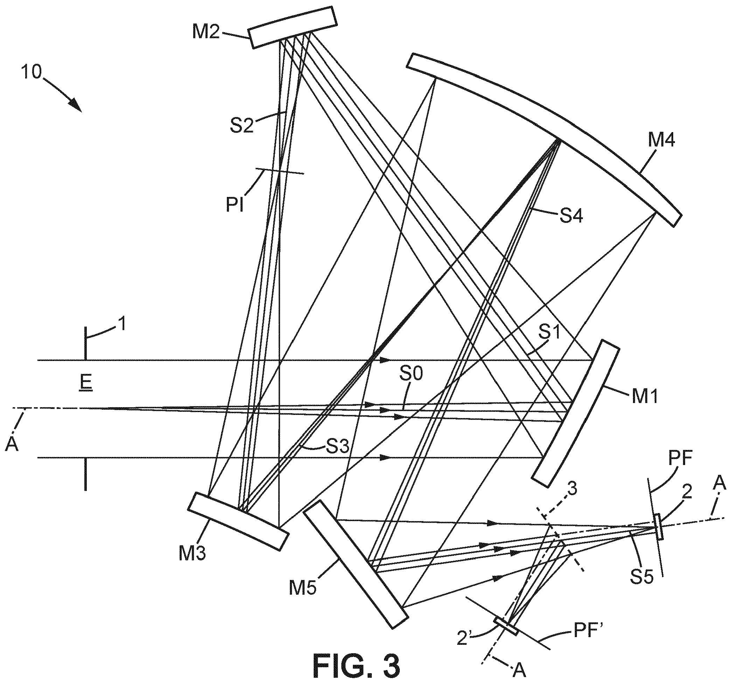

Alors, en appliquant la convention d'appellation des configurations qui a été présentée plus haut en référence à [Fig. 1a] et [Fig. 1b] aux miroirs M1 et M2, c'est-à-dire pour i=1, il apparaît que les télescopes 10 de [Fig. 2]-[Fig. 4], qui sont conformes à l'invention, sont tous de configuration α pour les miroirs M1 et M2. En recommençant pour i=2, ces télescopes 10 sont encore de configuration α pour les miroirs M2 et M3. Par contre, pour i=3, les trois télescopes 10 sont de configuration z. Enfin, pour i=4, les télescopes 10 de [Fig. 2] et [Fig. 3] sont de configuration z, alors que celui de [Fig. 4] est encore de configuration α. Ainsi, la configuration globale des télescopes de [Fig. 2] et [Fig. 3] est α-α-z-z, et celle du télescope de [Fig. 4] est o-α-z-α. Par conséquent, une caractéristique commune des télescopes de l'invention est que leur configuration globale commence par α-α-z, en pouvant se poursuivre soit par une configuration z soit par une configuration α pour les miroirs M4 et M5.

De façon générale pour l'invention, les surfaces réfléchissantes respectives des miroirs M1-M5 sont de type freeform^{®}, en pouvant être conçues préalablement par simulation numérique des trajets de rayons lumineux, ou «light ray tracing» en anglais.

Avantageusement, les formes des surfaces réfléchissantes des miroirs M1 et M2 peuvent être sélectionnées pour que chaque télescope 10 forme une image intermédiaire entre les miroirs M2 et M3. Le plan de formation d'une telle image intermédiaire est désigné par PI dans les figures. Il correspond à un lieu de convergence des rayons lumineux qui pénètrent dans chaque télescope 10 en étant parallèles entre eux.

Les télescopes 10 de [Fig. 2]-[Fig. 4] correspondent à trois configurations différentes de la partie finale de ces télescopes, constituée par le miroir M5 et le plan focal PF. Pour le télescope 10 de [Fig. 2], le miroir M5 est orienté de façon à réfléchir les rayons lumineux pour qu'ils passent entre les miroirs M1 et M4. Pour celui de [Fig. 3], le miroir M5 est orienté pour que les rayons lumineux passent d'un côté du miroir M1 qui est opposé au miroir M4. Enfin, pour [Fig. 4], les rayons lumineux réfléchis par le miroir M5 passent entre les miroirs M2 et M3. L'une de ces configurations peut être sélectionnée préférentiellement en fonction du dégagement qu'elle présente au niveau du plan focal PF, pour y placer le capteur d'images 2 avec son électronique de proximité et éventuellement aussi un cryostat.

Selon un perfectionnement possible, le plan focal PF de chaque télescope 10 peut être dupliqué en utilisant un séparateur dichroïque 3, par exemple du type lame ou biprisme. Un tel séparateur dichroïque 3 sépare les rayons lumineux en fonction de leur valeur de longueur d'onde, en les dirigeant soit vers le plan focal PF soit vers l'image qu'il en produit et qui est désignée par la référence PF'. Le séparateur dichroïque 3 peut par exemple être sélectionné pour transmettre les rayons lumineux dont les valeurs de longueur d'onde sont comprises entre 1400 nm et 2500 nm, correspondant au domaine spectral qui est appelé couramment SWIR, pour «Short Wavelength InfraRed» en anglais, ou infrarouge à courtes longueurs d'onde, et pour réfléchir les rayons lumineux dont les valeurs de longueur d'onde sont comprises entre 400 nm et 1400 nm, correspondant au domaine spectral qui est appelé couramment VNIR, pour «Visible and Near InfraRed» en anglais, ou visible et proche infrarouge. Au moins un capteur d'images 2' est placé dans l'image de plan focal PF'.

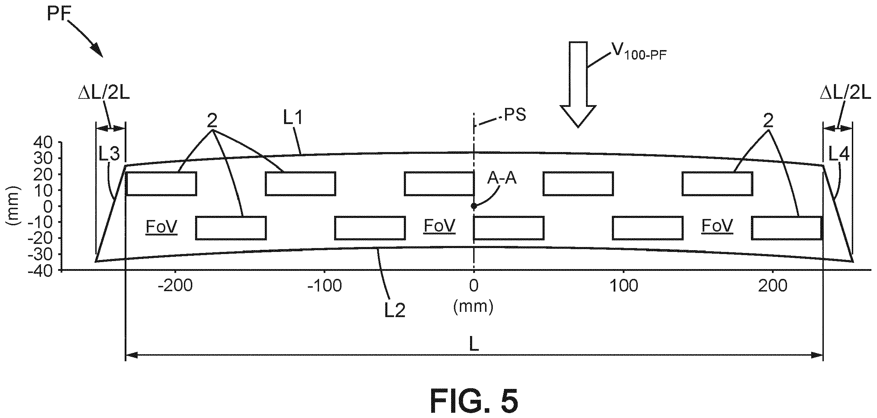

[Fig. 5] montre un agencement de plusieurs capteurs d'images 2 qui peuvent être disposés simultanément dans le plan focal PF pour saisir en parallèle des segments d'image adjacents. A titre d'exemple, douze capteurs d'images 2 peuvent être disposés en quinconce, selon deux alignements parallèles qui sont perpendiculaires à l'intersection du plan de symétrie du télescope 10 avec son plan focal PF. Le plan de symétrie du télescope 10 est désigné par la référence PS dans [Fig. 5], et son axe optique A-A 10 peut traverser le plan focal PF en un point de symétrie centrale de la répartition des capteurs d'images 2, mais non nécessairement. Un tel agencement de plan focal est connu de l'Homme du métier, pour obtenir une grande largeur de fauchée sans utiliser de balayage transversal de la ligne de visée du télescope. Dans l'exemple représenté, les capteurs d'images 2 forment tous ensemble une largeur de couverture continue L à l'intérieur du plan focal PF. Un agencement similaire de capteurs d'images peut aussi être adopté dans l'image de plan focal PF'.

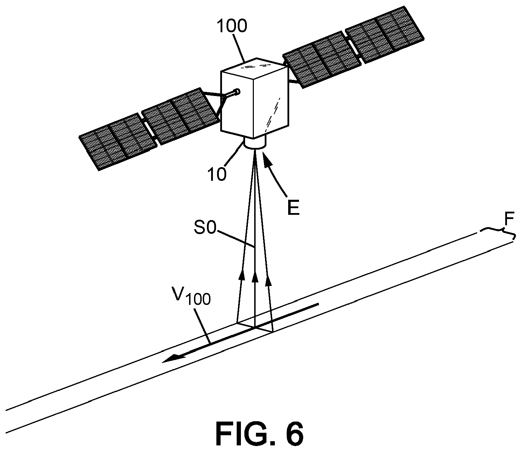

[Fig. 6] illustre une application de l'invention à de l'imagerie terrestre effectuée à partir d'un satellite qui est en orbite autour de la Terre. La référence 100 désigne le satellite à bord duquel le télescope 10 est embarqué, et V₁₀₀ désigne la vitesse apparente de défilement du satellite 100 sur la surface de la Terre. Lors du défilement du satellite 100, le segment initial S0 de rayon axial décrit une trace de défilement sur la surface de la Terre. En outre, le satellite 100 est orienté, ainsi que le télescope 10 à son bord, de sorte que les alignements des capteurs d'images 2 dans le plan focal PF soient perpendiculaires à la vitesse du déplacement apparent, notée V_{100-PF}, de l'image de la surface de la Terre dans ce plan focal, telle que cette image est formée par le télescope 10 (voir [Fig. 5]). Autrement dit, la vitesse V_{100-PF} du déplacement apparent de l'image de la surface de la Terre dans le plan focal PF est parallèle au plan de symétrie PS. Dans ces conditions d'utilisation du télescope 10, la scène qui est saisie continuellement en images par le télescope 10 lors du défilement du satellite 100 sur son orbite, est une bande de la surface terrestre, couramment appelée fauchée et désignée par la référence F dans [Fig. 6]. La largeur de la fauchée F est reliée à la largeur de couverture continue L des capteurs d'images 2 dans le plan focal PF, par l'intermédiaire du grandissement du télescope 10 ou de sa longueur focale. Par exemple, lorsque l'altitude du satellite 100 est d'environ 596 km (kilomètre) et la longueur focale du télescope 10 est 894 mm (millimètre), la largeur de couverture continue L peut être d'environ 459 mm, correspondant à une valeur d'environ 306 km pour la largeur de la fauchée F. Ainsi, dans [Fig. 5] et sans tenir compte de la rotation terrestre, les directions horizontale et verticale à l'intérieur de cette figure sont conjuguées avec les directions transversale et longitudinale de la fauchée F, respectivement. La direction horizontale est appelée «across-track direction» en anglais, et la direction verticale est appelée «along-track direction», aussi en anglais.

Encore dans [Fig. 5], la limite du champ de vue du télescope 10 à l'intérieur du plan focal PF est représentée de façon approximative. Ce champ de vue est désigné par FoV, pour «Field of View» en anglais. Il est limité longitudinalement, c'est-à-dire parallèlement à la vitesse du déplacement apparent V_{100-PF}, entre les segments L1 et L2, et limité transversalement, c'est-à-dire perpendiculairement à la vitesse du déplacement apparent V_{100-PF}, entre les segments L3 et L4. A cause de distorsions optiques, les segments L1 et L2 peuvent présenter une faible courbure, et les segments L3 et L4 peuvent être légèrement inclinés par rapport à la vitesse du déplacement apparent V_{100-PF}.

Pour les conditions d'utilisation du télescope 10 qui viennent d'être décrites, à bord du satellite 100 et lorsque le télescope 10 possède une configuration du type de celle de [Fig. 2], il peut avoir les caractéristiques numériques suivantes, à titre d'exemple :
volume du télescope 10 : 1,7 m³
surface totale des miroirs M1-M5 : 1,25 m² (mètre-carré)
pente maximale de la surface réfléchissante des miroirs M1-M5: 17 mrd (milliradian)
diamètre de la pupille d'entrée P : 200 mm
longueur focale du télescope 10: 894 mm
valeur absolue de la différence relative de longueur focale entre les directions parallèle et perpendiculaire à la vitesse du déplacement apparent V_{100-PF} : 0,3%
variation relative de la longueur focale le long de la direction perpendiculaire à la vitesse du déplacement apparent V_{100-PF}, à l'intérieur du champ de vue FoV : 6,5%
variation relative de la longueur focale le long de la direction parallèle à la vitesse du déplacement apparent V_{100-PF}, à l'intérieur du champ de vue FoV : 0,3%
décalage relatif des bords de champ, mesuré pour chaque segment L3 ou L4 et tel que désigné par ΔL/2L dans [Fig. 5] : 3,9%
variation maximale d'angle d'incidence des rayons lumineux sur le plan focal PF : 2,07°(degré)
longueur d'un diffuseur de calibration à utiliser à l'entrée du télescope : identique au diamètre de la pupille d'entrée P, c'est-à-dire égale à 200 mm, sans tenir compte d'une marge de sécurité à rajouter possiblement, qui peut être petite.

A titre de comparaison, pour un télescope TMA de même valeur de longueur focale qui est utilisé dans les mêmes conditions d'altitude pour le satellite 100 et de largeur de la fauchée F, le volume du télescope serait d'environ 2,7 m³, et la longueur du diffuseur de calibration serait d'au moins 1446 mm.

Il est entendu que l'invention est définie par les revendications suivantes, et peut être reproduite en modifiant des aspects secondaires des modes de réalisation qui ont été décrits en détail ci-dessus, tout en conservant certains au moins des avantages cités. Notamment, toutes les valeurs numériques qui ont été citées ne l'ont été qu'à titre d'illustration, et peuvent être changées en fonction de l'application considérée.

## Revendications

1. Télescope (10) à cinq miroirs, pour former une image d'une scène dans un plan focal (PF) avec des rayons lumineux qui sont issus de ladite scène et se réfléchissent successivement et dans l'ordre sur un miroir primaire (M1), un miroir secondaire (M2), un miroir tertiaire (M3), un quatrième miroir (M4) puis un cinquième miroir (M5) dudit télescope, le télescope ayant un plan de symétrie (PS), et chacun des cinq miroirs ayant une surface réfléchissante respective dont une portion au moins s'étend de chaque côté du plan de symétrie en ayant une forme courbe qui est symétrique par rapport audit plan de symétrie,
le télescope (10) étant conçu pour qu'un rayon lumineux axial qui entre dans ledit télescope en étant superposé à un axe optique (A-A) dudit télescope, se propage dans ledit télescope jusqu'au plan focal (PF) en étant constitué successivement par, selon un sens de propagation dudit rayon axial, un segment initial (S0) en amont du miroir primaire (M1), un premier segment intermédiaire (S1) entre le miroir primaire et le miroir secondaire (M2), un deuxième segment intermédiaire (S2) entre le miroir secondaire et le miroir tertiaire (M3), un troisième segment intermédiaire (S3) entre le miroir tertiaire et le quatrième miroir (M4), un quatrième segment intermédiaire (S4) entre le quatrième miroir et le cinquième miroir (M5), et un segment terminal (S5) entre le cinquième miroir et le plan focal (PF),
les miroirs étant disposés de sorte que, à l'intérieur du plan de symétrie (PS), le miroir secondaire (M2) et le quatrième miroir (M4) aient des sections respectives dans ledit plan de symétrie qui sont situées sur un même premier côté du segment initial (S0) du rayon axial, et le miroir tertiaire (M3) ainsi que le cinquième miroir (M5) aient d'autres sections respectives aussi dans ledit plan de symétrie qui sont situées sur un même second côté du segment initial du rayon axial, opposé au premier côté à l'intérieur du plan de symétrie,
et les miroirs étant disposés en outre de sorte que, aussi à l'intérieur du plan de symétrie (PS), la section du miroir secondaire (M2) soit située en amont de la section du quatrième miroir (M4), selon une projection perpendiculaire des sections des miroirs sur le segment initial (S0) du rayon axial, et la section du miroir tertiaire (M3) soit située en amont de la section du cinquième miroir (M5), encore selon ladite projection perpendiculaire des sections des miroirs sur le segment initial du rayon axial,
et les miroirs primaire (M1), secondaire (M2), tertiaire (M3) et le quatrième miroir (M4) étant orientés de sorte qu'à l'intérieur du plan de symétrie :
- le deuxième segment intermédiaire (S2) du rayon axial coupe le segment initial (S0) dudit rayon axial ;
- le troisième segment intermédiaire (S3) du rayon axial coupe le premier segment intermédiaire (S1) dudit rayon axial ; et
- le quatrième segment intermédiaire (S4) du rayon axial est situé d'un côté du troisième segment intermédiaire (S3) dudit rayon axial qui est opposé au deuxième segment intermédiaire (S2) dudit rayon axial.

2. Télescope (10) selon la revendication 1, dans lequel le cinquième miroir (M5) est orienté de sorte que le segment terminal (S5) du rayon axial soit situé d'un côté du quatrième segment intermédiaire (S4) dudit rayon axial qui est opposé au troisième segment intermédiaire (S3) dudit rayon axial.

3. Télescope (10) selon la revendication 2, dans lequel le cinquième miroir (M5) est orienté en outre de sorte que le segment terminal (S5) du rayon axial passe entre le miroir primaire (M1) et le quatrième miroir (M4), ou bien passe sur un côté du miroir primaire qui est opposé au quatrième miroir.

4. Télescope (10) selon la revendication 1, dans lequel le cinquième miroir (M5) est orienté de sorte que le segment terminal (S5) du rayon axial coupe le troisième segment intermédiaire (S3) dudit rayon axial, et passe sur un côté du miroir secondaire (M2) qui est opposé au quatrième miroir (M4).

5. Télescope (10) selon l'une quelconque des revendications précédentes, dans lequel la surface réfléchissante de chacun des miroirs primaire (M1), secondaire (M2), tertiaire (M3), quatrième miroir (M4) et cinquième miroir (M5) est dépourvue de symétrie de révolution.

6. Télescope (10) selon l'une quelconque des revendications précédentes, dans lequel les miroirs primaire (M1) et secondaire (M2) sont adaptés pour former une image intermédiaire de la scène qui est située entre ledit miroir secondaire et le miroir tertiaire (M3).

7. Télescope (10) selon l'une quelconque des revendications précédentes, comprenant en outre :
- un séparateur dichroïque (3) qui est situé sur le segment terminal (S5) du rayon axial, de façon à produire une image du plan focal (PF') du télescope (10) ;
- au moins un premier capteur d'images (2), qui est superposé au plan focal (PF) du télescope (10) ; et
- au moins un second capteur d'images (2'), qui est superposé à l'image du plan focal (PF') du télescope (10) produite par le séparateur dichroïque (3).

8. Télescope (10) selon la revendication 7, dans lequel le séparateur dichroïque (3) est adapté pour séparer des rayons lumineux qui sont associés à des valeurs de longueur d'onde comprises entre 400 nm et 1400 nm, d'autres rayons lumineux qui sont associés à des valeurs de longueur d'onde comprises entre 1400 nm et 2500 nm.

9. Satellite (100), comprenant un télescope (10) selon l'une quelconque des revendications précédentes, ledit télescope étant embarqué à bord dudit satellite.

10. Procédé de saisie d'images de la surface de la Terre à partir d'un satellite (100) qui est en orbite autour de la Terre, le satellite étant selon la revendication 9 et les images étant formées par le télescope (10), suivant lequel chaque image est saisie pendant que le satellite et le télescope sont orientés de sorte qu'une intersection du plan de symétrie (PS) du télescope avec le plan focal (PF) dudit télescope soit parallèle à une direction de déplacement apparent de la surface de la Terre dans ledit plan focal.

## Patentansprüche

1. Fünf-Spiegel-Teleskop (10) zum Erzeugen eines Bilds einer Szene in einer Fokalebene (PF) mit Lichtstrahlen, die von der Szene ausgehen und nacheinander und in der Reihenfolge an einem Primärspiegel (M1), einem Sekundärspiegel (M2), einem Tertiärspiegel (M3), einem vierten Spiegel (M4), dann an einem fünften Spiegel (M5) des Teleskops reflektiert werden, wobei das Teleskop eine Symmetrieebene (PS) hat und jeder der fünf Spiegel eine jeweilige reflektierende Oberfläche hat, mindestens ein Teil derer sich auf jeder Seite der Symmetrieebene in einer gewölbten Form erstreckt, die symmetrisch bezüglich der Symmetrieebene ist,
wobei das Teleskop (10) derart konzipiert ist, dass ein axialer Lichtstrahl, der, eine optischen Achse (A-A) des Teleskops überlagernd, in das Teleskop eintritt, sich in dem Teleskop bis zu einer Fokalebene (PF) ausbreitet und, in Ausbreitungsrichtung des axialen Strahls gesehen, sich der Reihe nach aus einem Anfangssegment (S0) vor dem Primärspiegel (M1), einem ersten Zwischensegment (S1) zwischen dem Primärspiegel und dem Sekundärspiegel (M2), einem zweiten Zwischensegment (S2) zwischen dem Sekundärspiegel und dem Tertiärspiegel (M3), einem dritten Zwischensegment (S3) zwischen dem Tertiärspiegel und dem vierten Spiegel (M4), einem vierten Zwischensegment (S4) zwischen dem vierten Spiegel und dem fünften Spiegel (M5) und einem Endsegment (S5) zwischen dem fünften Spiegel und der Fokalebene (PF) zusammensetzt,
wobei die Spiegel derart angeordnet sind, dass innerhalb der Symmetrieebene (PS) der Sekundärspiegel (M2) und der vierte Spiegel (M4) jeweilige Bereiche in der Symmetrieebene haben, die auf einer gleichen ersten Seite des Anfangssegments (S0) des axialen Strahls angeordnet sind, und der Tertiärspiegel (M3) sowie der fünfte Spiegel (M5) jeweilige andere Bereiche ebenfalls in der Symmetrieebene haben, die auf einer gleichen zweiten Seite des Anfangssegments des axialen Strahls angeordnet sind, die der ersten Seite innerhalb der Symmetrieebene gegenüberliegt, und wobei die Spiegel ferner derart angeordnet sind, dass, ebenfalls innerhalb der Symmetrieebene (PS), der Bereich des Sekundärspiegels (M2) vor dem Bereich des vierten Spiegels (M4) angeordnet ist, gemäß einer senkrechten Projektion der Bereiche der Spiegel auf das Anfangssegment (S0) des axialen Strahls, und der Bereich des Tertiärspiegels (M3) vor dem Bereich des fünften Spiegels (M5) angeordnet ist, wiederum gemäß der senkrechten Projektion der Bereiche der Spiegel auf das Anfangssegment des axialen Strahls,
und der Primärspiegel (M1), der Sekundärspiegel (M2), der Tertiärspiegel (M3) und der vierte Spiegel (M4) derart orientiert sind, dass innerhalb der Symmetrieebene:
- das zweite Zwischensegment (S2) des axialen Strahls das Anfangssegment (S0) des axialen Strahls schneidet;
- das dritte Zwischensegment (S3) des axialen Strahls das erste Zwischensegment (S1) des axialen Strahls schneidet; und
- das vierte Zwischensegment (S4) des axialen Strahls auf der einen Seite des dritten Zwischensegments (S3) des axialen Strahls angeordnet ist und das zweite Zwischensegment (S2) des axialen Strahls auf dessen anderen Seite angeordnet ist.

2. Teleskop (10) nach Anspruch 1, in welchem der fünfte Spiegel (M5) derart orientiert ist, dass das Endsegment (S5) des axialen Strahls auf der einen Seite des vierten Zwischensegments (S4) des axialen Strahls angeordnet ist, das dem dritten Zwischensegment (S3) des axialen Strahls gegenüberliegt.

3. Teleskop (10) nach Anspruch 2, in welchem der fünfte Spiegel (M5) zudem derart orientiert ist, dass das Endsegment (S5) des axialen Strahls zwischen dem Primärspiegel (M1) und dem vierten Spiegel (M4) hindurchgeht oder auch auf einer von dem vierten Spiegel aus gesehen gegenüberliegenden Seite des Primärspiegels hindurchgeht.

4. Teleskop (10) nach Anspruch 1, in welchem der fünfte Spiegel (M5) derart orientiert ist, dass das Endsegment (S5) des axialen Strahls das dritte Zwischensegment (S3) des axialen Strahls schneidet und auf einer Seite des Sekundärspiegels (M2) hindurchgeht, die dem vierten Spiegel (M4) gegenüberliegt.

5. Teleskop (10) nach einem der vorstehenden Ansprüche, in welchem die reflektierende Oberfläche jedes des Primärspiegels (M1), des Sekundärspiegels (M2), des Tertiärspiegels (M3), des vierten Spiegels (M4) und des fünften Spiegels (M5) keine Rotationssymmetrie aufweist.

6. Teleskop (10) nach einem der vorstehenden Ansprüche, in welchem der Primärspiegel (M1) und der Sekundärspiegel (M2) angepasst sind, um ein Zwischenbild der Szene zu erzeugen, das zwischen dem Sekundärspiegel und dem Tertiärspiegel (M3) angeordnet ist.

7. Teleskop (10) nach einem der vorstehenden Ansprüche, ferner aufweisend:
- einen dichromatischen Separator (3), der an dem Endsegment (S5) des axialen Strahls angeordnet ist, derart, um ein Bild der Fokalebene (PF') des Teleskops (10) zu erzeugen;
- mindestens einen ersten Bildsensor (2), der der Fokalebene (PF) des Teleskops (10) überlagert ist; und
- mindestens einen zweiten Bildsensor (2'), der dem von dem dichromatischen Separator (3) erzeugten Bild der Fokalebene (PF') des Teleskops (10) überlagert ist.

8. Teleskop (10) nach Anspruch 7, in welchem der dichromatische Separator (3) angepasst ist, um Lichtstrahlen mit zugehörigen Wellenlängenwerten zwischen 400nm und 1400nm von anderen Lichtstrahlen mit zugehörigen Wellenlängenwerten zwischen 1400nm und 2500nm zu separieren.

9. Satellit (100) aufweisend ein Teleskop (10) nach einem der vorstehenden Ansprüche, wobei das Teleskop an Bord des Satelliten untergebracht ist.

10. Verfahren zum Erfassen von Bildern der Oberfläche der Erde von einem Satelliten (100) aus, der sich auf einer Umlaufbahn um die Erde befindet, wobei der Satellit gemäß Anspruch 9 ist und die Bilder von dem Teleskop (10) erzeugt werden, gemäß welchem Verfahren jedes Bild erfasst wird, während der Satellit und das Teleskop derart orientiert sind, dass ein Schnitt der Symmetrieebene (PS) des Teleskops mit der Fokalebene (PF) des Teleskops parallel zu einer scheinbaren Fortbewegungsrichtung der Oberfläche der Erde in der Fokalebene ist.

## Claims

1. A five-mirror telescope (10), for forming an image of a scene in a focal plane (PF) with light rays that originate from said scene and are reflected successively and in order on a primary mirror (M1), a secondary mirror (M2), a tertiary mirror (M3), a fourth mirror (M4) and then a fifth mirror (M5) of said telescope, the telescope having a symmetry plane (PS), and each of the five mirrors having a respective reflecting surface at least a portion of which extends on either side of the symmetry plane while having a curved shape that is symmetrical with respect to said symmetry plane,
the telescope (10) being designed so that an axial light ray that enters said telescope while being superimposed on an optical axis (A-A) of said telescope propagates in said telescope up to the focal plane (PF) while consisting successively of, in a direction of propagation of said axial ray, an initial segment (S0) upstream of the primary mirror (M1), a first intermediate segment (S1) between the primary mirror and the secondary mirror (M2), a second intermediate segment (S2) between the secondary mirror and the tertiary mirror (M3), a third intermediate segment (S3) between the tertiary mirror and the fourth mirror (M4), a fourth intermediate segment (S4) between the fourth mirror and the fifth mirror (M5), and an end segment (S5) between the fifth mirror and the focal plane (PF),
the mirrors being arranged so that, within the symmetry plane (PS), the secondary mirror (M2) and the fourth mirror (M4) have respective sections in said symmetry plane that are located on a same first side of the initial segment (S0) of the axial ray, and the tertiary mirror (M3) and the fifth mirror (M5) have other respective sections also in said symmetry plane that are located on a same second side of the initial segment of the axial ray, opposite the first side within the symmetry plane,
and the mirrors furthermore being arranged so that, also within the symmetry plane (PS), the section of the secondary mirror (M2) is located upstream of the section of the fourth mirror (M4), in a perpendicular projection of the sections of the mirrors onto the initial segment (S0) of the axial ray, and the section of the tertiary mirror (M3) is located upstream of the section of the fifth mirror (M5), also in said perpendicular projection of the sections of the mirrors onto the initial segment of the axial ray,
and the primary (M1), secondary (M2), tertiary (M3) mirrors and the fourth mirror (M4) being orientated so that, within the symmetry plane:
- the second intermediate segment (S2) of the axial ray cuts the initial segment (S0) of said axial ray;
- the third intermediate segment (S3) of the axial ray cuts the first intermediate segment (S1) of said axial ray; and
- the fourth intermediate segment (S4) of the axial ray is located on a side of the third intermediate segment (S3) of said axial ray that is opposite the second intermediate segment (S2) of said axial ray.

2. The telescope (10) according to claim 1, wherein the fifth mirror (M5) is oriented so that the end segment (S5) of the axial ray is located on a side of the fourth intermediate segment (S4) of said axial ray that is opposite the third intermediate segment (S3) of said axial ray.

3. The telescope (10) according to claim 2, wherein the fifth mirror (M5) is furthermore oriented so that the end segment (S5) of the axial ray passes between the primary mirror (M1) and the fourth mirror (M4), or passes on a side of the primary mirror that is opposite the fourth mirror.

4. The telescope (10) according to claim 1, wherein the fifth mirror (M5) is oriented so that the end segment (S5) of the axial ray cuts the third intermediate segment (S3) of said axial ray, and passes on a side of the secondary mirror (M2) that is opposite the fourth mirror (M4).

5. The telescope (10) according to any one of the preceding claims, wherein the reflecting surface of each of the primary (M1), secondary (M2), tertiary (M3), fourth (M4) and fifth mirrors (M5) has no symmetry of revolution.

6. The telescope (10) according to any one of the preceding claims, wherein the primary (M1) and secondary (M2) mirrors are adapted to form an intermediate image of the scene that is located between said secondary mirror and the tertiary mirror (M3).

7. The telescope (10) according to any one of the preceding claims, furthermore comprising:
- a dichroic separator (3) that is located on the end segment (S5) of the axial ray, so as to produce an image of the focal plane (PF') of the telescope (10);
- at least one first image sensor (2) that is superimposed on the focal plane (PF) of the telescope (10); and
- at least one second image sensor (2') that is superimposed on the image of the focal plane (PF') of the telescope (10) produced by the dichroic separator (3).

8. The telescope (10) according to claim 7, wherein the dichroic separator (3) is adapted to separate light rays that are associated with wavelength values of between 400 nm and 1400 nm, from other light rays that are associated with wavelength values of between 1400 nm and 2500 nm.

9. A satellite (100) comprising a telescope (10) according to any one of the preceding claims, said telescope being installed on board said satellite.

10. A method for capturing images of the surface of the Earth from a satellite (100) that is in orbit around the Earth, the satellite being according to claim 9 and the images being formed by the telescope (10), according to which each image is captured while the satellite and the telescope are oriented so that an intersection of the symmetry plane (PS) of the telescope with the focal plane (PF) of said telescope is parallel to a direction of apparent movement of the surface of the Earth in said focal plane.
